# EUROPÄISCHE PATENTANMELDUNG

(11) **EP 3 530 418 A1**
(43) Veröffentlichungstag der Anmeldung: **28.08.2019**
(21) Anmeldenummer: 18157895.6
(22) Anmeldetag: 21.02.2018
(51) Int. Cl.: B25J 9/16

(54) **VERFAHREN UND VORRICHTUNG ZUM BESTIMMEN EINES OPTIMIERTEN BEWEGUNGSABLAUFS EINER ROBOTEREINRICHTUNG**

(71) Anmelder: Siemens Aktiengesellschaft, 80333 München (DE)
(72) Erfinder: Schmitt, Philipp Sebastian, 81735 München (DE); Wirnshofer, Florian, 80335 München (DE)

(57) **Zusammenfassung**

Es wird ein Verfahren zum Bestimmen eines optimierten Bewegungsablaufs einer Robotereinrichtung zur Bewegung eines ersten Gegenstandes derart, dass der erste Gegenstand unabhängig von einer Unsicherheit einer Pose des ersten Gegenstands in Bezug auf einen zweiten Gegenstand und/oder unabhängig von einer Unsicherheit einer Pose der Robotereinrichtung in eine Zielpose gebracht wird, vorgeschlagen. Das Verfahren umfasst:
Simulieren von Bewegungsabschnitten der Robotereinrichtung unter Berücksichtigung der Unsicherheit der Pose des ersten Gegenstands und/oder der Unsicherheit der Pose der Robotereinrichtung; und
Bestimmen des optimierten Bewegungsablaufs der Robotereinrichtung unter Berücksichtigung der simulierten Bewegungsabschnitte und von Randbedingungen, die zumindest eine Startpose und die Zielpose des ersten Gegenstands angeben.

Es wird ein optimierter Bewegungsablauf bestimmt, mit welchem die Robotereinrichtung den ersten Gegenstand zuverlässig in seine Zielpose führen kann.

## Beschreibung

Die vorliegende Erfindung betrifft ein Verfahren zum Bestimmen eines optimierten Bewegungsablaufs einer Robotereinrichtung sowie eine Vorrichtung zur Durchführung eines solchen Verfahrens.

Robotereinrichtungen können zum Beispiel in industriellen Anlagen eingesetzt werden, um Gegenstände, insbesondere Werkstücke, zu bewegen und/oder zusammenzuführen. Im Allgemeinen kann davon gesprochen werden, dass ein erster Gegenstand in Bezug auf einen zweiten Gegenstand durch einen Bewegungsablauf der Robotereinrichtung in eine Zielpose gebracht wird. Es kann dabei gewünscht sein, den Bewegungsablauf derart zu optimieren, dass der erste Gegenstand auch bei Störungen und/oder bei Fehlern in Modelldarstellungen der Gegenstände richtig in die Zielpose gebraucht wird.

Vor diesem Hintergrund besteht eine Aufgabe der vorliegenden Erfindung darin, ein verbessertes Bestimmen eines optimierten Bewegungsablaufs einer Robotereinrichtung bereitzustellen.

Gemäß einem ersten Aspekt wird ein Verfahren zum Bestimmen eines optimierten Bewegungsablaufs einer Robotereinrichtung zur Bewegung eines ersten Gegenstandes derart, dass der erste Gegenstand unabhängig von einer Unsicherheit einer Pose des ersten Gegenstands in Bezug auf einen zweiten Gegenstand und/oder unabhängig von einer Unsicherheit einer Pose der Robotereinrichtung in eine Zielpose gebracht wird, vorgeschlagen. Das Verfahren umfasst:
Simulieren von Bewegungsabschnitten der Robotereinrichtung unter Berücksichtigung der Unsicherheit der Pose des ersten Gegenstands und/oder der Unsicherheit der Pose der Robotereinrichtung; und
Bestimmen eines optimierten Bewegungsablaufs der Robotereinrichtung unter Berücksichtigung der simulierten Bewegungsabschnitte und von Randbedingungen, die zumindest eine Startpose und die Zielpose des ersten Gegenstands angeben.

Die Robotereinrichtung ist zum Beispiel ein Roboter, ein Roboterarm oder eine Einrichtung, die einen vorgegebenen Bewegungsablauf und/oder Bewegungsabschnitte durchführen kann. Die Robotereinrichtung kann in einem automatisierten Herstellungsverfahren, insbesondere in einer industriellen Anlage, oder in einem Verpackungsverfahren Einsatz finden.

Die Robotereinrichtung ist insbesondere geeignet, den ersten Gegenstand in Bezug auf den zweiten Gegenstand in die Zielpose zu bringen. Hierbei können der erste und der zweite Gegenstand, im Folgenden zusammen auch als "Gegenstände" bezeichnet, zum Beispiel zusammengeführt werden. Der erste Gegenstand kann durch die Robotereinrichtung in den zweiten Gegenstand hineingesteckt werden oder auf den zweiten Gegenstand gelegt werden, um die Gegenstände anschließend aneinander zu befestigen. Die Endpose des ersten Gegenstands in Bezug auf die Pose des zweiten Gegenstands kann als Zielpose bezeichnet werden.

Unter der "Pose" eines Objekts wird insbesondere eine Position und/oder eine Orientierung dieses Objekts verstanden. Die Begriffe "Zielpose" und "Startpose" können analog definiert werden.

Unter einem Bewegungsablauf kann eine Abfolge von Einzelbewegungen der Robotereinrichtung verstanden werden. Der Bewegungsablauf kann eine Vielzahl an Bewegungsabschnitten umfassen. Insbesondere sind mehrere Bewegungsabschnitte derart aneinandersetzbar, dass sie einen Bewegungsablauf bilden. Der Bewegungsablauf und/oder der Bewegungsabschnitt kann zum Beispiel angeben, in welche Richtung entlang eines Koordinatensystems die Robotereinrichtung den ersten Gegenstand bewegen soll, mit welcher Geschwindigkeit die Robotereinrichtung den ersten Gegenstand bewegen soll und/oder welche Kraft die Robotereinrichtung dabei aufbringen soll, insbesondere im Rahmen einer Impedanzregelung.

Bei der Simulation der Bewegungsabschnitte handelt es sich insbesondere um physikalische Simulationen. Zum Simulieren der Bewegungsabschnitte kann ein Simulator eingesetzt werden. Bei dem Simulator handelt es sich zum Beispiel um einen Festkörpersimulator, der das dynamische System (erster Gegenstand und Robotereinrichtung) abbildet. Insbesondere kann jeder Bewegungsabschnitt durch eine Bewegungsabschnittstartpose und eine Bewegungsabschnittzielpose beschrieben werden. Im Rahmen der Simulation können, ausgehend von einer Anfangspose, zufällige Bewegungsabschnitte bestimmt werden. Mehrere der simulierten Bewegungsabschnitte können zusammenhängend einen Bewegungsablauf bilden.

Der Simulator ist insbesondere geeignet, komplexe Bewegungsabschnitte zu simulieren. Tatsächlich kann der Bewegungsablauf Bewegungen in bis zu sechs Freiheitsgraden (drei rotatorische und drei translatorische) umfassen. Zudem kann der Kontakt der Robotereinrichtung mit dem ersten Gegenstand und/oder der Kontakt zwischen den beiden Gegenständen eine gewisse Nichtlinearität bewirken, welche schwierig zu modellieren ist. Zudem ist der Prozess, in dem der erste Gegenstand in die Zielpose geführt wird, ein dynamischer Prozess, weshalb zumindest Geschwindigkeiten in die Simulation mit einfließen können.

Die Unsicherheit der Pose des ersten Gegenstands bezeichnet insbesondere eine Unbestimmtheit darüber, wo der erste Gegenstand genau vorliegt. Die Unsicherheit der Pose des ersten Gegenstands ist insbesondere in Bezug auf den zweiten Gegenstand definiert, weshalb auch Unsicherheiten der Pose des zweiten Gegenstandes durch die Unsicherheit der Pose des ersten Gegenstandes abgedeckt werden können. Die Unsicherheit der Pose des ersten Gegenstands kann dadurch auftreten, dass der erste und/oder zweite Gegenstand eine gewisse Elastizität und/oder einen bestimmten Reibungskoeffizienten aufweist, die nicht durch Modelldarstellungen des ersten und/oder zweiten Gegenstands berücksichtigt werden. Die Unsicherheit der Pose des ersten Gegenstands ist insbesondere nicht immer konstant und kann von Gegenstand zu Gegenstand unterschiedlich sein.

Die Unsicherheit der Robotereinrichtung beschreibt insbesondere eine Ungewissheit darüber, wo sich die Robotereinrichtung genau befindet. Die Ungewissheit der Robotereinrichtung kann auch eine Abbildung für ungenaue Modelldarstellungen der Robotereinrichtung sein. Ferner kann die Ungewissheit der Robotereinrichtung eine Störung einer Bewegung der Robotereinrichtung repräsentieren.

In dem beschriebenen Verfahren können mehrere Bewegungsabschnitte, insbesondere zwanzig Bewegungsabschnitte oder noch mehr, simuliert werden. Bei jeder dieser Simulationen können die Unsicherheit der Pose des ersten Gegenstands und/oder die Unsicherheit der Pose der Robotereinrichtung berücksichtigt werden. Im Folgenden werden die Unsicherheit der Pose des ersten Gegenstandes und die der Robotereinrichtung zusammen als "Unsicherheit der Pose" bezeichnet.

Insbesondere wird bei jeder Simulation eines Bewegungsabschnitts ein unterschiedlicher Wert für die Unsicherheit der Pose berücksichtigt. Es können zudem Eigenschaften der Robotereinrichtung, auch Robotereinrichtungseigenschaften, und/oder Gegenstandseigenschaften des ersten und/oder zweiten Gegenstands, welche im Folgenden noch näher beschrieben werden, berücksichtigt werden.

Durch das Simulieren der Bewegungsabschnitte wird insbesondere eine Vielzahl von simulierten Bewegungsabschnitten erhalten. Die einzelnen simulierten Bewegungsabschnitte werden anschließend zum Beispiel im Hinblick auf deren Qualität ausgewertet. Sie können auch zusammengesetzt werden, um einen optimierten Bewegungsablauf zu bilden.

Die Auswertung der simulierten Bewegungsabschnitte führt insbesondere dazu, dass ein optimierter Bewegungsablauf der Robotereinrichtung bestimmt wird. Zur Bestimmung des optimierten Bewegungsablaufs können die Startpose und die Zielpose des ersten Gegenstands als Randbedingungen berücksichtigt werden. Die Startpose ist dabei insbesondere eine Pose des ersten Gegenstands, bevor die Robotereinrichtung den ersten Gegenstand gemäß einem Bewegungsablauf bewegt und in die Zielpose führt.

Der optimierte Bewegungsablauf ist ein Bewegungsablauf, der der Robotereinrichtung insbesondere ermöglicht, den ersten Gegenstand in die Zielpose zu führen, selbst wenn eine Unsicherheit der Pose des ersten Gegenstands und/oder der Robotereinrichtung vorliegt. Das heißt, dass zwei unterschiedliche erste Gegenstände, die mit der Robotereinrichtung entlang desselben optimierten Bewegungsablaufs bewegt werden, beide in die Zielpose geführt werden können, auch wenn sie mit unterschiedlichen Unsicherheiten behaftet sind.

Die Bestimmung eines optimierten Bewegungsablaufs ermöglicht insbesondere ein verlässliches Bewegen des ersten Gegenstands in die Zielpose. Es wird insbesondere ein optimierter Bewegungsablauf bereitgestellt, der den ersten Gegenstand - trotz Modellfehlern und anderen variablen Störungen - in die gewünschte Zielpose führt. Es ist dabei beispielsweise nicht notwendig, in aufwendiger Weise zu probieren, die Modellfehler so weit wie möglich zu reduzieren, und/oder Störungen so weit wie möglich auszuschließen.

Das Bestimmen des optimierten Bewegungsablaufs kann auf flexible Weise erfolgen, weil es automatisch durchgeführt wird. Es kann insbesondere auch bereits für eine Bewegung, die nur ein einziges Mal oder nur wenige Male mit der Robotereinrichtung durchgeführt werden soll, ein optimierter Bewegungsablauf bestimmt werden, weil die Bestimmung des optimierten Bewegungsablaufs mit geringen Aufwand erfolgen kann. Dadurch, dass die Bestimmung des optimierten Bewegungsablaufs unter Berücksichtigung der Unsicherheit der Pose des ersten Gegenstands und/oder der Unsicherheit der Pose der Robotereinrichtung erfolgt, kann das beschriebene Verfahren besonders vielseitig eingesetzt werden. Bei dem Bestimmen des optimierten Bewegungsablaufs kann auch von einem Planen, insbesondere von einem kinodynamischen Planen des optimierten Bewegungsablaufs gesprochen werden.

In Ausführungsformen umfasst das Verfahren ferner ein Durchführen des optimierten Bewegungsablaufs mit der Robotereinrichtung derart, dass der erste Gegenstand in Bezug auf den zweiten Gegenstand in die Zielpose geführt wird.

Gemäß einer Ausführungsform weist die Robotereinrichtung eine Kompensationseigenschaft auf, welche einer partiellen Kompensation der Robotereinrichtung für die Unsicherheit der Pose des ersten Gegenstands und/oder für die Unsicherheit der Pose der Robotereinrichtung dient; und wobei
das Bestimmen des optimierten Bewegungsablaufs ein Bestimmen einer optimierten Kompensationseigenschaft der Robotereinrichtung umfasst, oder das Simulieren der Bewegungsabschnitte ferner unter Berücksichtigung einer vorbestimmten Kompensationseigenschaft der Robotereinrichtung erfolgt.

Die Kompensationseigenschaft der Robotereinrichtung, die der partiellen Kompensation der Robotereinrichtung für die Unsicherheit der Pose dient, wird im Folgenden auch als "Nachgiebigkeit" bezeichnet. Es handelt sich dabei zum Beispiel um ein Federverhalten oder um ein Dämpfverhalten der Robotereinrichtung. Zudem kann die Kompensation der Robotereinrichtung für die Unsicherheit der Pose auch anhand einer Nachgiebigkeitsregelung, insbesondere anhand einer Impedanzkontrolle, der Robotereinrichtung erfolgen.

Die Nachgiebigkeit kann beim Bestimmen des optimierten Bewegungsablaufs bestimmt, insbesondere berechnet, werden. Alternativ kann die Nachgiebigkeit bereits ein Eingabewert bei der Simulation der Bewegungsabschnitte sein, sodass das Simulieren der Bewegungsabschnitte unter Berücksichtigung einer vorbestimmten Nachgiebigkeit der Robotereinrichtung erfolgt.

Die Nachgiebigkeit der Robotereinrichtung dient insbesondere dazu, zu verhindern, dass die Robotereinrichtung sich selbst, den ersten Gegenstand und/oder den zweiten Gegenstand zerstört, weil sie wegen einer der Unsicherheiten daneben greift.

Gemäß einer weiteren Ausführungsform ist die Unsicherheit der Pose des ersten Gegenstands und/oder der Robotereinrichtung ein gewählter Wert einer statistischen Unsicherheitsverteilung.

Insbesondere werden die Unsicherheit der Pose des ersten Gegenstands anhand einer ersten Unsicherheitsverteilung und die Unsicherheit der Pose der Robotereinrichtung anhand einer weiteren Unsicherheitsverteilung modelliert. Die Unsicherheit kann insbesondere unterschiedliche Werte annehmen. Eine Verteilung dieser Werte kann in der statistischen Unsicherheitsverteilung wiedergegeben sein. Die Unsicherheit der Pose des ersten Gegenstands und/oder der Robotereinrichtung, dessen Wert bei dem Simulieren der Bewegungsabschnitte verwendet wird, kann aus dieser Unsicherheitsverteilung gewählt sein.

Gemäß einer weiteren Ausführungsform wird die Unsicherheit der Pose des ersten Gegenstands und/oder der Robotereinrichtung stichprobenartig aus der statistischen Unsicherheitsverteilung gewählt.

Das heißt insbesondere, dass die Unsicherheit der Pose des ersten Gegenstands und/oder der Robotereinrichtung zufallsbasiert aus der Unsicherheitsverteilung gewählt wird. Die stichprobenartige Auswahl dient insbesondere der Abbildung der Unsicherheitsdichtefunktion.

Gemäß einer weiteren Ausführungsform erfolgt das Simulieren der mehreren Bewegungsabschnitte unter Berücksichtigung unterschiedlicher Werte der Unsicherheit der Pose des ersten Gegenstands und/oder der Robotereinrichtung.

Zum Beispiel wird für mehrere Simulationen eines selben Bewegungsabschnitts ein unterschiedlicher Unsicherheitswert verwendet. Diese unterschiedlichen Unsicherheitswerte können der statistischen Unsicherheitsverteilung entnommen werden.

Gemäß einer weiteren Ausführungsform werden bei dem Simulieren der Bewegungsabschnitte zufällig mehrere Bewegungsabschnitte bestimmt, die alle von einer selben Bewegungsabschnittstartpose der Robotereinrichtung ausgehen. Dabei umfasst das Verfahren ferner:
zufälliges Auswählen einer Bewegungsabschnittzielpose einer der mehreren simulierten Bewegungsabschnitte und Festlegen dieser ausgewählten Bewegungsabschnittzielpose als eine neue Bewegungsabschnittstartpose;
Wiederholen des Simulierens der Bewegungsabschnitte, des zufälligen Auswählens einer Bewegungsabschnittzielpose und des Festlegens der ausgewählten Bewegungsabschnittzielpose als eine neue Bewegungsabschnittstartpose, bis eine Bewegungsabschnittzielpose einer der mehreren simulierten Bewegungsabschnitten in einem vorbestimmten Zielbereich liegt.

Beim Simulieren der Bewegungsabschnitte wird insbesondere zunächst von der Bewegungsabschnittstartpose ausgegangen. Bei der Bewegungsabschnittstartpose kann es sich um die Startpose des ersten Gegenstands handeln. Von dieser Bewegungsabschnittstartpose können mehrere Bewegungsabschnitte simuliert werden. Diese Bewegungsabschnitte sind insbesondere zufällige Bewegungsabschnitte, die alle die Bewegungsabschnittstartpose als Anfangspose haben. Die einzelnen simulieren Bewegungsabschnitte können jedoch unterschiedliche Bewegungsabschnittzielposen haben.

Im Rahmen des Simulierens wird insbesondere aus diesen mehreren Bewegungsabschnittzielposen eine einzige Bewegungsabschnittzielpose zufällig ausgewählt. Die ausgewählte Bewegungsabschnittzielpose wird als ein neuer Startpunkt, also als eine neue Bewegungsabschnittstartpose, definiert. Von dieser neuen Bewegungsabschnittstartpose können erneut mehrere Bewegungsabschnitte zufällig simuliert werden, welche wiederum unterschiedliche (neue) Bewegungsabschnittzielposen haben können. Es kann erneut eine zufällige Auswahl einer der (neuen) Bewegungsabschnittzielposen erfolgen, um diese als weitere Bewegungsabschnittstartpose zu verwenden.

Die Schritte der Simulation der Bewegungsabschnitte, der zufälligen Auswahl einer Bewegungsabschnittzielpose und des Festlegens der ausgewählten Bewegungsabschnittzielpose als neue Bewegungsabschnittstartpose können iterativ wiederholt werden. Insbesondere werden sie wiederholt, bis erkannt wird, dass sich eine Bewegungsabschnittzielpose eines simulierten Bewegungsabschnitts in dem Zielbereich befindet. Der Zielbereich umfasst insbesondere die Zielpose.

Liegt eine Bewegungsabschnittzielpose in dem Zielbereich, kann mit dem Simulieren aufgehört werden, und die einzelnen Bewegungsabschnitte, die zu dem Zielbereich geführt haben, können aneinander gesetzt werden, um so den optimierten Bewegungsablauf zu erhalten.

Gemäß einer weiteren Ausführungsform erfolgt das Bestimmen des optimierten Bewegungsablaufs der Robotereinrichtung durch ein Aneinandersetzen von mindestens zwei der simulierten Bewegungsabschnitte.

Gemäß einer weiteren Ausführungsform wird beim Simulieren der Bewegungsabschnitte zumindest eine Robotereinrichtungseigenschaft, eine erste Gegenstandseigenschaft des ersten Gegenstands und/oder eine zweite Gegenstandseigenschaft des zweiten Gegenstands berücksichtigt.

Gemäß einer weiteren Ausführungsform umfasst die Robotereinrichtungseigenschaft zumindest:
eine durch die Robotereinrichtung anwendbare maximale Kraft;
eine Modelldarstellung der Robotereinrichtung; und/oder
mögliche Bewegungen der Robotereinrichtung.

Bei der durch die Robotereinrichtung anwendbaren maximalen Kraft handelt es sich insbesondere um eine Kraftgrenze der Robotereinrichtung entlang einer bestimmten Richtung. Die Modelldarstellung der Robotereinrichtung kann ein CAD-Modell (Computer Aided Design) sein und zum Beispiel angeben, wie groß die Robotereinrichtung ist. Die möglichen Bewegungen der Robotereinrichtung bezeichnen zudem insbesondere diejenigen Bewegungen, die die Robotereinrichtung durchführen kann.

Gemäß einer weiteren Ausführungsform umfasst die erste und/oder zweite Gegenstandseigenschaft (im Folgenden auch zusammen als "Gegenstandseigenschaften" bezeichnet) zumindest:
einen Reibungskoeffizienten des ersten und/oder des zweiten Gegenstands;
eine Größe und/oder Form des ersten und/oder des zweiten Gegenstands;
eine Modelldarstellung des ersten und/oder des zweiten Gegenstands;
ein Gewicht des ersten und/oder des zweiten Gegenstands; und/oder
eine Materialeigenschaft des ersten und/oder des zweiten Gegenstands.

Die Modelldarstellung des ersten und/oder des zweiten Gegenstands kann ein CAD-Modell sein. Dadurch, dass das Bestimmen des optimierten Bewegungsablaufs unter Berücksichtigung der Robotereinrichtungseigenschaft und/oder der Gegenstandeigenschaften erfolgt, kann der optimierte Bewegungsablauf anwendungsspezifisch bestimmt werden.

Gemäß einer weiteren Ausführungsform umfasst das Bestimmen des optimierten Bewegungsablaufs:
Berechnen einer Kostenfunktion für jeden simulierten Bewegungsabschnitt; und
Bestimmen des optimierten Bewegungsablaufs in Abhängigkeit der berechneten Kostenfunktionen.

Die Kostenfunktion ist insbesondere eine Angabe dafür, wie geeignet ein simulierter Bewegungsabschnitt ist.

Gemäß einer Ausführungsform umfasst das Verfahren ferner:
Bestimmen von mehreren Bewegungsabläufen anhand der simulierten Bewegungsabschnitte;
Berechnen einer Gesamtkostenfunktion für jeden Bewegungsablauf anhand der Kostenfunktionen der Bewegungsabschnitte der jeweiligen Bewegungsabläufe; und
Auswählen des Bewegungsablaufs mit der minimalen Gesamtkostenfunktion aus den mehreren Bewegungsabläufen als den optimierten Bewegungsablauf.

Ein aus mehreren Bewegungsabschnitten zusammengestellter Bewegungsablauf kann eine Gesamtkostenfunktion haben, die eine Summe der Kostenfunktionen der einzelnen Bewegungsabschnitte des Bewegungsablaufs ist. Der optimierte Bewegungsablauf kann der Bewegungsablauf sein, der nach mehreren Durchläufen derjenige ist, dessen Gesamtkostenfunktion minimal ist.

Gemäß einer Ausführungsform umfasst das Verfahren ferner:
Bestimmen eines ersten Bewegungsablaufs anhand der simulierten Bewegungsabschnitte;
Bestimmen eines Bewegungsablaufteils, der zumindest zwei Bewegungsabschnitte umfasst;
Berechnen der Kostenfunktion des Bewegungsablaufteils; und
Weiterverfolgen des Bewegungsablaufteils, falls die Kostenfunktion des Bewegungsablaufteils geringer als eine Kostenfunktion des ersten Bewegungsablaufs ist.

Die Bestimmung eines Bewegungsablaufs erfolgt insbesondere schrittweise. Bei jedem Schritt kann ein Bewegungsabschnitt an den bestehenden Bewegungsablaufteil angehängt werden und überprüft werden, ob die Kostenfunktion des entstandenen Bewegungsablaufteils einen vorbestimmten Wert überscheitet. Bei dem vorbestimmten Wert kann es sich um die Kostenfunktion eines zuvor bestimmten Bewegungsablaufs, nämlich des ersten Bewegungsablaufs, handeln. Falls die Kostenfunktion des Bewegungsablaufteils bereits größer als die Kostenfunktion des ersten Bewegungsablaufs ist, wird dieser Bewegungsablaufteil insbesondere nicht weiterverfolgt. Das heißt zum Beispiel, dass keine weiteren Bewegungsabschnitte angehängt werden, um einen vollständigen Bewegungsablauf zu erhalten. Es kann insbesondere sichergestellt werden, dass nur Bewegungsablaufteile weiterverfolgt werden, die im Hinblick auf die Kostenfunktion gut sind. Dadurch kann der Rechenaufwand deutlich reduziert werden. Insbesondere kann eine Lösung für den optimierten Bewegungsablauf mit wenig Rechenaufwand gefunden werden.

Gemäß einer weiteren Ausführungsform enthält die Kostenfunktion eine Angabe über:
eine Qualität des simulierten Bewegungsabschnitts;
eine Länge einer dem simulierten Bewegungsabschnitt entsprechenden Bahn;
eine Dauer eines Durchführens des simulierten Bewegungsabschnitts;
einen Energieverbrauch des Durchführens des simulierten Bewegungsabschnitts; und/oder
eine beim Durchführen des simulierten Bewegungsabschnitts auftretende Kraft auf den ersten und/oder zweiten Gegenstand.

Die Bahn, auch Bewegungsbahn, ist insbesondere eine Strecke, entlang der sich der erste Gegenstand bewegt, wenn die Robotereinrichtung den simulierten Bewegungsabschnitt durchführt.

Gemäß einer weiteren Ausführungsform repräsentiert die Unsicherheit der Pose des ersten Gegenstands eine Unsicherheit eines verwendeten Modells für den ersten und/oder zweiten Gegenstand und/oder eine Fertigungstoleranz des ersten und/oder zweiten Gegenstands.

Bei der Unsicherheit des verwendeten Modells kann es sich zum Beispiel um einen Fehler in der Modelldarstellung des ersten Gegenstands und/oder des zweiten Gegenstands handeln. Solch ein Fehler kann beispielsweise sein, dass das Modell die Elastizität des ersten und/oder zweiten Gegenstands nicht berücksichtigt.

Gemäß einem zweiten Aspekt wird ein Computerprogrammprodukt vorgeschlagen, welches auf einer programmgesteuerten Einrichtung die Durchführung des Verfahrens gemäß dem ersten Aspekt oder gemäß einer Ausführungsform des ersten Aspekts veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird eine Vorrichtung zum Bestimmen eines optimierten Bewegungsablaufs einer Robotereinrichtung zur Bewegung eines ersten Gegenstandes derart, dass der erste Gegenstand unabhängig von einer Unsicherheit einer Pose des ersten Gegenstands in Bezug auf einen zweiten Gegenstand und/oder unabhängig von einer Unsicherheit einer Pose der Robotereinrichtung in eine Zielpose gebracht wird, vorgeschlagen. Die Vorrichtung umfasst:
eine Simulationseinheit zum Simulieren von Bewegungsabschnitten der Robotereinrichtung unter Berücksichtigung der Unsicherheit der Pose des ersten Gegenstands und/oder der Unsicherheit der Pose der Robotereinrichtung; und
eine Bestimmungseinheit zum Bestimmen des optimierten Bewegungsablaufs der Robotereinrichtung unter Berücksichtigung der simulierten Bewegungsabschnitte und von Randbedingungen, die zumindest eine Startpose und die Zielpose des ersten Gegenstands angeben.

Die jeweilige Einheit, zum Beispiel die Simulationseinheit oder die Bestimmungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einer Ausführungsform ist die Vorrichtung geeignet, das Verfahren gemäß dem ersten Aspekt oder gemäß einer Ausführungsform des ersten Aspekts durchzuführen.

Die für das vorgeschlagene Verfahren beschriebenen Ausführungsformen und Merkmale gelten für die vorgeschlagene Vorrichtung entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein Beispiel einer Herstellungsvorrichtung, in der ein erster Gegenstand in einer Startpose ist;
- Fig. 2: zeigt ein Beispiel der Herstellungsvorrichtung, in der der erste Gegenstand in einer Zielpose ist;
- Fig. 3: zeigt ein Verfahren zum Bestimmen eines optimierten Bewegungsablaufs einer Robotereinrichtung gemäß einer ersten Ausführungsform;
- Fig. 4: zeigt ein Verfahren zum Bestimmen eines optimierten Bewegungsablaufs einer Robotereinrichtung gemäß einer zweiten Ausführungsform;
- Fig. 5: zeigt ein Beispiel eines Bewegens eines ersten Gegenstands entlang eines optimierten Bewegungsablaufs; und
- Fig. 6: zeigt eine Vorrichtung zum Bestimmen eines optimierten Bewegungsablaufs einer Robotereinrichtung gemäß einer Ausführungsform.

In den Figuren sind gleiche oder funktionsgleiche Elemente mit denselben Bezugszeichen versehen worden, sofern nichts anderes angegeben ist.

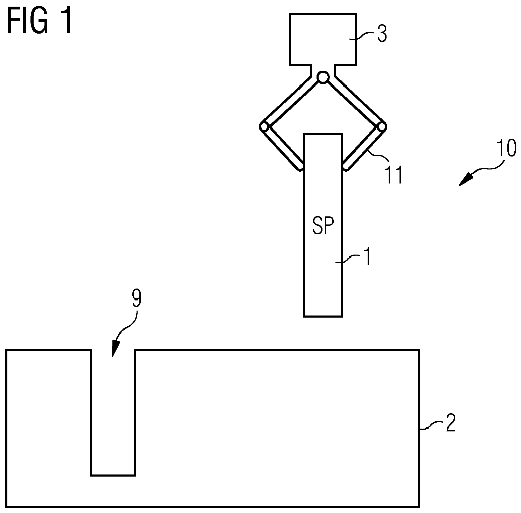

Die Fig. 1 zeigt ein Beispiel einer Herstellungsvorrichtung 10. Die Herstellungsvorrichtung 10 ist Teil eines automatisierten industriellen Systems. Sie umfasst eine Robotereinrichtung 3, einen ersten Gegenstand 1 und einen zweiten Gegenstand 2.

Bei dem ersten Gegenstand 1 handelt es sich um ein zylinderförmiges Werkstück aus Kunststoff. Die Größe des ersten Gegenstands 1 ist derart gewählt, dass der erste Gegenstand 1 in eine Bohröffnung 9 des zweiten Gegenstands 2 hineingesteckt werden kann. Bei dem zweiten Gegenstand 2 handelt es sich um ein weiteres Kunststoffteil.

Die Robotereinrichtung 3 ist ein Roboter, der zum Zusammenführen von Bauteilen dient. Die Robotereinrichtung 3 ist dabei zur Durchführung unterschiedlicher Bewegungsabläufe programmierbar. Sie kann zum Beispiel den ersten Gegenstand 1 in die Bohröffnung 9 des zweiten Gegenstands 2 führen. Hierzu umfasst die Robotereinrichtung 3 einen Roboterarm 11, der den ersten Gegenstand 1 greifen kann.

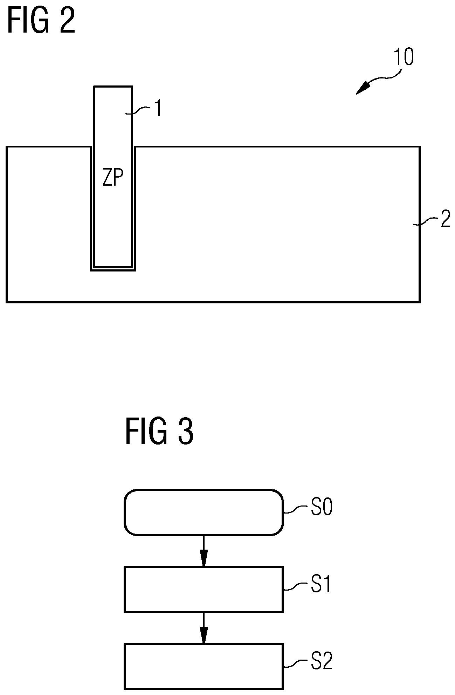

In der Fig. 1 ist dargestellt, wie der Roboterarm 11 den ersten Gegenstand 1 in einer Startpose SP hält. Anhand eines geeigneten programmierten Bewegungsablaufs führt die Robotereinrichtung 3 den ersten Gegenstand 1 in die Bohröffnung 9 des zweiten Gegenstands 2, sodass der erste Gegenstand 1 eine Zielpose ZP erreicht. Dieses ist in der Fig. 2 dargestellt. Die Pose des ersten Gegenstands 1 bezeichnet eine Kombination aus einer Position und einer Orientierung des ersten Gegenstands und wird relativ zu einer Pose (Position und Orientierung) des zweiten Gegenstands 2 definiert.

Die Pose des ersten Gegenstands 1 in Bezug auf den zweiten Gegenstand 2 weist eine gewisse Unsicherheit auf. Diese Unsicherheit tritt aufgrund der physikalischen Eigenschaften des ersten und zweiten Gegenstands 1, 2 auf, welche schwer einschätzbar und modellierbar sind. Diese physikalischen Eigenschaften können zum Beispiel die Elastizität oder der Reibungskoeffizient des Materials, das den ersten und/oder zweiten Gegenstand 1, 2 bildet, sein.

Darüber hinaus weist auch die Pose der Robotereinrichtung 3 eine gewisse Unsicherheit auf.

Der Bewegungsablauf, der der Robotereinrichtung 3 vorgegeben wird, führt den ersten Gegenstand 1 unabhängig von der Unsicherheit der Pose des ersten Gegenstands 1 und unabhängig von der Unsicherheit der Pose der Robotereinrichtung 3, zuverlässig in seine Zielpose ZP. Solch ein Bewegungsablauf wird insbesondere "optimierter Bewegungsablauf" genannt.

Die Robotereinrichtung 3 weist eine Kompensationseigenschaft (im Folgenden auch "Nachgiebigkeit") auf, die zu einer zumindest partiellen Kompensation der Unsicherheit der Pose des ersten Gegenstands 1 und/oder der Unsicherheit der Pose der Robotereinrichtung 3 dient. Hierzu weist die Robotereinrichtung 3 ein nicht dargestelltes Federsystem auf.

Der optimierte Bewegungsablauf kann anhand eines Verfahrens zum Bestimmen des optimierten Bewegungsablaufs der Robotereinrichtung 3 bestimmt werden. Die Fig. 3 zeigt ein Beispiel eines solchen Verfahrens gemäß einer ersten Ausführungsform.

In einem (fakultativen) Vorbereitungsschritt S0 werden die Robotereinrichtung 3 und die beiden Gegenstände 1, 2 bereitgestellt.

In einem Schritt S1 werden Bewegungsabschnitte der Robotereinrichtung 3 simuliert. Ein Bewegungsabschnitt entspricht einer Abfolge an Bewegungen der Robotereinrichtung 3. Zum Simulieren der Bewegungsabschnitte wird ein Festkörpersimulator eingesetzt. Insgesamt werden mindestens dreißig Bewegungsabschnitte simuliert. Die Simulationen der Bewegungsabschnitte erfolgen alle unter Berücksichtigung derselben vorbestimmten Robotereinrichtungseigenschaften und derselben ersten und zweiten Gegenstandseigenschaften des ersten und des zweiten Gegenstands 1, 2. Bei den Robotereinrichtungseigenschaften handelt es sich um durch die Robotereinrichtung 3 maximal anwendbare Kräfte sowie um mögliche Bewegungen der Robotereinrichtung 3. Bei den Gegenstandseigenschaften handelt es sich um eine CAD-Modelldarstellung des ersten und des zweiten Gegenstands 1, 2 und um Materialeigenschaften dieser Gegenstände 1, 2. Diese Eigenschaften kann ein Benutzer dem Simulator vorgeben.

Bei der Simulation der unterschiedlichen Bewegungsabläufe werden unterschiedliche Werte der Unsicherheit der Pose des ersten Gegenstands 1 und der Unsicherheit der Pose der Robotereinrichtung 3 berücksichtigt. Die Unsicherheitswerte werden dabei zufallsbasiert aus statistischen Unsicherheitsverteilungen gewählt.

In einem Schritt S2 wird anhand der in dem Schritt S1 simulierten Bewegungsabschnitte ein optimierter Bewegungsablauf bestimmt. Dies erfolgt unter Berücksichtigung der Startpose SP und der Zielpose ZP des ersten Gegenstands 1. In dem Schritt S2 werde mehrere der simulierten Bewegungsabschnitte aneinander gesetzt, sodass sie einen Bewegungsablauf für die Robotereinrichtung 3 bilden, mit dem die Robotereinrichtung 3 den ersten Gegenstand 1 von der Startpose SP in die Zielpose ZP führen kann. Dieser aus mehreren simulierten Bewegungsabschnitten zusammengesetzter Bewegungsablauf entspricht dem optimierten Bewegungsablauf. Anhand des optimierten Bewegungsablaufs kann die Robotereinrichtung 3 den ersten Gegenstand 1 unabhängig von der Unsicherheit der Pose des ersten Gegenstands 1 und unabhängig von der Unsicherheit der Pose der Robotereinrichtung verlässlich in die Zielpose ZP führen. Die durch die Robotereinrichtung 3 anzuwendende Nachgiebigkeit wird als Teil des optimierten Bewegungsablaufs bestimmt.

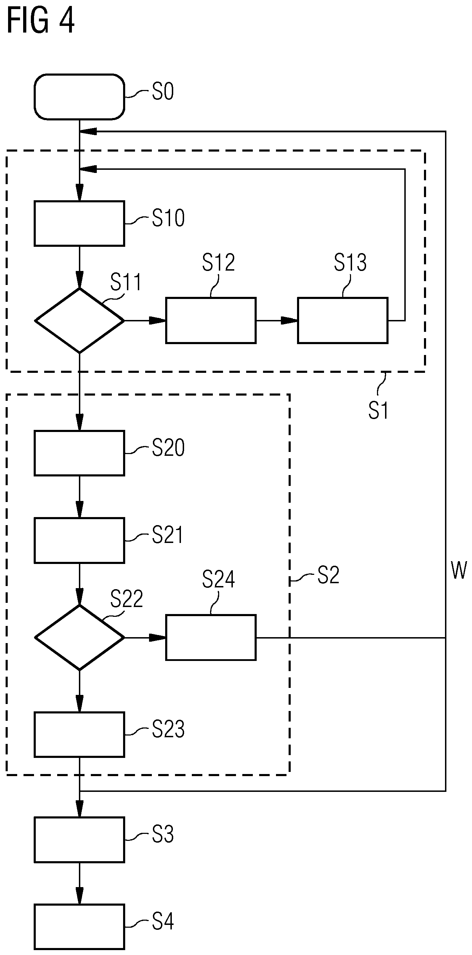

Die Fig. 4 zeigt ein Verfahren zum Bestimmen eines optimierten Bewegungsablaufs einer Robotereinrichtung gemäß einer zweiten Ausführungsform. Der Schritt S0 des Verfahrens gemäß der zweiten Ausführungsform entspricht dem Schritt S0, der im Hinblick auf das Verfahren gemäß der ersten Ausführungsform (Fig. 3) bereits beschrieben wurde und wird deswegen nicht nochmal beschrieben.

In den Verfahren gemäß der zweiten Ausführungsform umfasst der Schritt des Simulierens S1 die Schritte S10 - S13. In dem Schritt S10 werden zufällig mehrere Bewegungsabschnitte bestimmt, die alle von einer selben Bewegungsabschnittstartpose der Robotereinrichtung ausgehen. Bei der Bewegungsabschnittstartpose handelt es sich bei dem ersten Durchlauf um die Startpose des ersten Gegenstands 1. Die simulierten Bewegungsabschnitte weisen unterschiedliche Bewegungsabschnittzielposen auf.

In dem Schritt S11 wird ermittelt, ob eine der Bewegungsabschnittzielposen in einem Zielbereich liegt. Der Zielbereich kann die Zielpose des ersten Gegenstands 1 umfassen.

Falls keine Bewegungsabschnittzielpose in dem Zielbereich liegt, werden die Schritte S12 und S13 durchgeführt. In dem Schritt S12 wird eine Bewegungsabschnittzielpose einer der mehreren simulierten Bewegungsabschnitte zufällig ausgewählt. In dem Schritt S13 wird die in dem Schritt S12 ausgewählte Bewegungsabschnittzielpose als eine neue Bewegungsabschnittstartpose festgelegt.

Nach den Schritten S12 und S13 werden die Schritte S10 und S11 erneut durchgeführt. Das heißt, es werden erneut mehrere Bewegungsabschnitte simuliert, welche dieses Mal alle dieselbe neue Bewegungsabschnittstartpose als Bewegungsabschnittstartpose haben.

Die Schritte S10, S11 und ggf. S12 und S13 werden wiederholt, bis in dem Schritt S11 ermittelt wird, dass eine der anhand der Simulation erhaltene Bewegungsabschnittzielposen sich in dem Zielbereich befindet.

In diesem Fall wird der Schritt S2 durchgeführt. Der Schritt S2 umfasst die Schritte S20, S21, S22, S23 und S24. In dem Schritt S20 werden die simulierten Bewegungsabschnitte, die dazu geführt haben, dass eine Bewegungsabschnittzielpose in dem Zielbereich vorliegt, zusammengeführt. Diese zusammengeführten Bewegungsabschnitte bilden einen Bewegungsablauf.

In dem Schritt S21 wird eine Gesamtkostenfunktion des in dem Schritt S20 gebildeten Bewegungsablaufs berechnet. Hierzu werden Kostenfunktionen der einzelnen Bewegungsabschnitte, die den Bewegungsabschnitt bilden, berechnet und zusammengezählt. Die Kostenfunktion ist hier eine Angabe einer Dauer des Durchführens des simulierten Bewegungsabschnitts. Es ist wünschenswert, die Dauer des Durchführens des gesamten Bewegungsablaufs zu minimieren, weil dadurch eine Herstellungsmenge bei gegebener Zeit erhöht werden kann. Die Berechnung der Gesamtkostenfunktion dient somit dazu, ein Bestimmen des optimierten Bewegungsablaufs zu vereinfachen.

In dem Schritt S22 wird ermittelt, ob die Gesamtkostenfunktion geringer als eine zuvor berechnete Gesamtkostenfunktion eines zuvor bestimmten (ersten) Bewegungsablaufs ist. Falls dies der Fall ist, wird der in dem Schritt S20 bestimmte Bewegungsablauf behalten (Schritt S23). Falls die Gesamtkostenfunktion nicht geringer als die zuvor berechnete Gesamtkostenfunktion des zuvor bestimmten (ersten) Bewegungsablaufs ist, wird der in dem Schritt S20 bestimmte Bewegungsablauf verworfen (Schritt S24). Falls es sich bei dem in dem Schritt S20 bestimmten Bewegungsablauf um den ersten Bewegungsablauf handelt, wird der Schritt S23 durchgeführt.

Die Schritte S1 und S2 können beliebig oft wiederholt werden, um den in dem Schritt S20 bestimmten Bewegungsablauf zu optimieren. Die Wiederholung ist in der Fig. 4 anhand der Pfeils W dargestellt. Nach einer vorbestimmten Anzahl an Wiederholungen, d.h. Durchläufen, wird in einem Schritt S3 der zuletzt in dem Schritt S23 behaltene Bewegungsablauf als der optimierte Bewegungsablauf bestimmt.

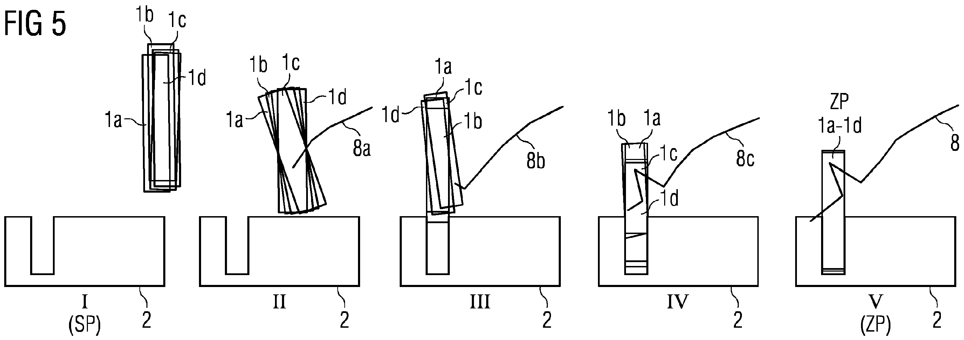

In einem Schritt S4 bewegt die Robotereinrichtung 3 den ersten Gegenstand 1 entlang des in dem Schritt S3 festgelegten optimierten Bewegungsablaufs und führt den ersten Gegenstand 1 dabei in die Zielpose ZP. Dieses Bewegen des ersten Gegenstands 1 ist in der Fig. 5 gezeigt.

Die Fig. 5 zeigt ein Beispiel eines Bewegens eines ersten Gegenstands 1a - 1d entlang eines optimierten Bewegungsablaufs 8. In der Fig. 5 sind vier erste Gegenstände 1a - 1d dargestellt. Diese vier ersten Gegenstände 1a - 1d entsprechen dem in Bezug auf die Fig. 1 beschriebenen ersten Gegenstand 1. Die ersten Gegenstände 1a - 1d unterscheiden sich voneinander durch ihre genaue Pose in Bezug auf den zweiten Gegenstand 2, sind aber ansonsten identisch. Die Posenunterschiede entsprechen der zuvor beschriebenen Unsicherheit der Pose des ersten Gegenstands 1a - 1d und der zuvor beschriebenen Unsicherheit der Pose der Robotereinrichtung 3.

Die Fig. 5 stellt Posen I - V der ersten Gegenstände 1a - 1d dar, wobei die Pose I der Startpose SP der ersten Gegenstände 1a - 1d und die Pose V der Zielpose ZP der ersten Gegenstände 1a - 1d entspricht. Die Posen II, III und IV entsprechen Posen der ersten Gegenstände 1a - 1d zwischen der Startpose SP und der Zielpose ZP.

In jeder der in der Fig. 5 dargestellten Posen I - V sind die ersten Gegenstände 1a - 1d übereinander dargestellt. Es wird allerdings zu jedem Zeitpunkt nur ein einziger erster Gegenstand 1a - 1d zum zweiten Gegenstand 2 geführt. Die ersten Gegenstände 1a - 1d werden durch die Robotereinrichtung 3 bewegt, auch wenn diese in der Fig. 5 aus Gründen der Übersichtlichkeit nicht dargestellt ist.

In den Posen II, III und IV ist jeweils der Teil 8a - 8c des optimierte Bewegungsablaufs 8, entlang den die Robotereinrichtung 3 den ersten Gegenstand 1 geführt hat, dargestellt. Der gesamte optimierte Bewegungsablauf 8 ist in der Pose V sichtbar.

Die ersten Gegenstände 1a - 1d werden, trotz der Unterschiede in deren Posen, alle entlang des gleichen optimierten Bewegungsablaufs 8 in die Zielpose ZP geführt. In der Zielpose ZP sind alle ersten Gegenstände 1a - 1d richtig in der Bohröffnung 9 des zweiten Gegenstands 2 angeordnet. Der optimierte Bewegungsablauf ermöglicht somit ein zuverlässiges Führen der ersten Gegenstände 1a - 1d in ihre Zielpose ZP, unabhängig von Unsicherheiten in den Posen der ersten Gegenstände 1a - 1d und unabhängig von den Unsicherheiten in der Pose der Robotereinrichtung 3.

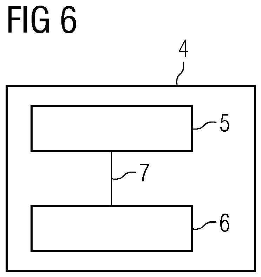

Die Fig. 6 zeigt eine Vorrichtung 4 zum Bestimmen eines optimierten Bewegungsablaufs einer Robotereinrichtung 3 gemäß einer Ausführungsform. Die Vorrichtung 4 umfasst eine Simulationseinheit 5 und eine Bestimmungseinheit 6, welche beispielsweise über eine interne Leitung 7 miteinander verbunden sind.

Die Simulationseinheit 5 ist zum Simulieren von Bewegungsabschnitten der Robotereinrichtung 3 unter Berücksichtigung der Unsicherheit der Pose des ersten Gegenstands 1, 1a - 1d und/oder der Unsicherheit der Pose der Robotereinrichtung 3 geeignet. Die Bestimmungseinheit 6 ist zum Bestimmen des optimierten Bewegungsablaufs der Robotereinrichtung 3 unter Berücksichtigung der simulierten Bewegungsabschnitte und von Randbedingungen, die zumindest die Startpose SP und die Zielpose ZP des ersten Gegenstands 1, 1a - 1d angeben, geeignet.

Die Vorrichtung 4 ist geeignet, das Verfahren zum Bestimmen des optimierten Bewegungsablaufs gemäß der ersten und/oder zweiten Ausführungsform (Fig. 3 und 4) durchzuführen.

Obwohl die vorliegende Erfindung anhand von Ausführungsbeispielen beschrieben wurde, ist sie vielfältig modifizierbar. Es ist zum Beispiel möglich, bereits während des Simulierens der Bewegungsabschnitte Bewegungsablaufteile zu bestimmen und eine Kostenfunktion für diese Bewegungsablaufteile zu berechnen. Insbesondere werden nur Bewegungsablaufteile weiter verfolgt, die eine Kostenfunktion haben, die geringer als eine Kostenfunktion eines zuvor bestimmten Bewegungsablaufs ist. Es ist auch denkbar, dass der erste Gegenstand 1 durch die Robotereinrichtung 3 auf den zweiten Gegenstand 2 gelegt oder gepresst wird. Die Kostenfunktion kann auch zusätzlich oder alternativ zur Angabe der Dauer des Durchführens des simulierten Bewegungsabschnitts zum Beispiel einen Energieverbrauch des Durchführens des simulierten Bewegungsabschnitts und/oder eine auf den ersten Gegenstand auftretende Kraft angeben.

## Patentansprüche

1. Verfahren zum Bestimmen eines optimierten Bewegungsablaufs (8) einer Robotereinrichtung (3) zur Bewegung eines ersten Gegenstandes (1, 1a - 1d) derart, dass der erste Gegenstand (1, 1a - 1d) unabhängig von einer Unsicherheit einer Pose des ersten Gegenstands (1, 1a - 1d) in Bezug auf einen zweiten Gegenstand (2) und/oder unabhängig von einer Unsicherheit einer Pose der Robotereinrichtung (3) in eine Zielpose (ZP) gebracht wird, wobei das Verfahren umfasst:
Simulieren (S1) von Bewegungsabschnitten der Robotereinrichtung (3) unter Berücksichtigung der Unsicherheit der Pose des ersten Gegenstands (1, 1a - 1d) und/oder der Unsicherheit der Pose der Robotereinrichtung (3); und
Bestimmen (S2) des optimierten Bewegungsablaufs (8) der Robotereinrichtung (3) unter Berücksichtigung der simulierten Bewegungsabschnitte und von Randbedingungen, die zumindest eine Startpose (SP) und die Zielpose (ZP) des ersten Gegenstands (1, 1a - 1d) angeben.

2. Verfahren nach Anspruch 1,
**dadurch gekennzeichnet,**
**dass** die Robotereinrichtung (3) eine Kompensationseigenschaft aufweist, welche einer partiellen Kompensation der Robotereinrichtung (3) für die Unsicherheit der Pose des ersten Gegenstands (1, 1a - 1d) und/oder der Unsicherheit der Pose der Robotereinrichtung (3) dient; und wobei
das Bestimmen des optimierten Bewegungsablaufs (8) ein Bestimmen einer optimierten Kompensationseigenschaft der Robotereinrichtung (3) umfasst, oder das Simulieren der Bewegungsabläufe ferner unter Berücksichtigung einer vorbestimmten Kompensationseigenschaft der Robotereinrichtung (3) erfolgt.

3. Verfahren nach Anspruch 1 oder 2,
**dadurch gekennzeichnet,**
**dass** die Unsicherheit der Pose des ersten Gegenstands (1, 1a
- 1d) und/oder der Robotereinrichtung (3) ein gewählter Wert, insbesondere ein stichprobenartig gewählter Wert, einer statistischen Unsicherheitsverteilung ist.

4. Verfahren nach einem der Ansprüche 1 - 3,
**dadurch gekennzeichnet,**
**dass** das Simulieren der mehreren Bewegungsabschnitte unter Berücksichtigung unterschiedlicher Werte der Unsicherheit der Pose des ersten Gegenstands (1, 1a - 1d) und/oder der Robotereinrichtung (3) erfolgt.

5. Verfahren nach einem der Ansprüche 1 - 4,
**dadurch gekennzeichnet,**
**dass** beim Simulieren (S1) der Bewegungsabschnitte zufällig mehrere Bewegungsabschnitte bestimmt werden (S11), die alle von einer selben Bewegungsabschnittstartpose der Robotereinrichtung (3) ausgehen; wobei das Verfahren ferner umfasst:
zufälliges Auswählen (S12) einer Bewegungsabschnittzielpose einer der mehreren simulierten Bewegungsabschnitte und Festlegen (S13) dieser ausgewählten Bewegungsabschnittzielpose als eine neue Bewegungsabschnittstartpose; und
Wiederholen des Simulierens (S11) der Bewegungsabschnitte, des zufälligen Auswählens (S12) einer Bewegungsabschnittzielpose und des Festlegens (S13) der ausgewählten Bewegungsabschnittzielpose als eine neue Bewegungsabschnittstartpose, bis eine Bewegungsabschnittzielpose einer der mehreren simulierten Bewegungsabschnitten in einem vorbestimmten Zielbereich liegt.

6. Verfahren nach einem der Ansprüche 1 - 5,
**dadurch gekennzeichnet,**
**dass** das Bestimmen (S2) des optimierten Bewegungsablaufs (8) der Robotereinrichtung (3) durch ein Aneinandersetzen von mindestens zwei der simulierten Bewegungsabschnitte erfolgt.

7. Verfahren nach einem der Ansprüche 1 - 6,
**dadurch gekennzeichnet,**
**dass** beim Simulieren (S1) der Bewegungsabschnitte zumindest eine Robotereinrichtungseigenschaft, eine erste Gegenstandseigenschaft des ersten Gegenstands (1, 1a - 1d) und/oder eine zweite Gegenstandseigenschaft des zweiten Gegenstands (2) berücksichtigt wird; wobei die Robotereinrichtungseigenschaft zumindest umfasst:
eine durch die Robotereinrichtung (3) anwendbare maximale Kraft;
eine Modelldarstellung der Robotereinrichtung (3);
und/oder
mögliche Bewegungen der Robotereinrichtung (3); und/oder wobei
die erste und/oder zweite Gegenstandseigenschaft zumindest umfasst:
einen Reibungskoeffizienten des ersten Gegenstands (1, 1a - 1d) und/oder des zweiten Gegenstands (2);
eine Größe und/oder Form des ersten Gegenstands (1, 1a - 1d) und/oder des zweiten Gegenstands (2);
eine Modelldarstellung des ersten Gegenstands (1, 1a - 1d) und/oder des zweiten Gegenstands (2);
ein Gewicht des ersten Gegenstands (1, 1a - 1d) und/oder des zweiten Gegenstands (2); und/oder
eine Materialeigenschaft des ersten Gegenstands (1, 1a - 1d) und/oder des zweiten Gegenstands (2).

8. Verfahren nach einem der Ansprüche 1 - 7,
**dadurch gekennzeichnet,**
**dass** das Bestimmen (S2) des optimierten Bewegungsablaufs (8) umfasst:
Berechnen (S3) einer Kostenfunktion für jeden simulierten Bewegungsabschnitt; und
Bestimmen (S3) des optimierten Bewegungsablaufs (8) in Abhängigkeit der berechneten Kostenfunktionen.

9. Verfahren nach Anspruch 8,
**gekennzeichnet durch**
Bestimmen von mehreren Bewegungsabläufen anhand der simulierten Bewegungsabschnitte;
Berechnen (S21) einer Gesamtkostenfunktion für jeden Bewegungsablauf anhand der Kostenfunktionen der Bewegungsabschnitte der jeweiligen Bewegungsabläufe; und
Auswählen des Bewegungsablaufs mit der minimalen Gesamtkostenfunktion aus den mehreren Bewegungsabläufen als den optimierten Bewegungsablauf (8).

10. Verfahren nach Anspruch 8,
**gekennzeichnet durch**
Bestimmen eines ersten Bewegungsablaufs anhand der simulierten Bewegungsabschnitte;
Bestimmen eines Bewegungsablaufteils, der zumindest zwei Bewegungsabschnitte umfasst;
Berechnen der Kostenfunktion des Bewegungsablaufteils; und
Weiterverfolgen des Bewegungsablaufteils, falls die Kostenfunktion des Bewegungsablaufteils geringer als eine Kostenfunktion des ersten Bewegungsablaufs ist.

11. Verfahren nach einem der Ansprüche 8 bis 10,
**dadurch gekennzeichnet,**
**dass** die Kostenfunktion eine Angabe enthält, über:
eine Qualität des simulierten Bewegungsabschnitts;
eine Länge einer dem simulierten Bewegungsabschnitt entsprechenden Bahn;
eine Dauer eines Durchführens des simulierten Bewegungsabschnitts;
einen Energieverbrauch des Durchführens des simulierten Bewegungsabschnitts; und/oder
eine beim Durchführen des simulierten Bewegungsabschnitts auftretende Kraft auf den ersten und/oder zweiten Gegenstand (1, 1a - 1d, 2).

12. Verfahren nach einem der Ansprüche 1 bis 11,
**dadurch gekennzeichnet,**
**dass** die Unsicherheit der Pose des ersten Gegenstands (1, 1a
- 1d) eine Unsicherheit eines verwendeten Modells des ersten und/oder zweiten Gegenstands (1, 1a - 1d, 2) und/oder eine Fertigungstoleranz des ersten und/oder zweiten Gegenstands (1, 1a - 1d, 2) repräsentiert.

13. Computerprogrammprodukt, welches auf einer programmgesteuerten Einrichtung die Durchführung des Verfahrens nach einem der Ansprüche 1 bis 12 veranlasst.

14. Vorrichtung (4) zum Bestimmen eines optimierten Bewegungsablaufs (8) einer Robotereinrichtung (3) zur Bewegung eines ersten Gegenstandes (1, 1a - 1d) derart, dass der erste Gegenstand (1, 1a - 1d) unabhängig von einer Unsicherheit einer Pose des ersten Gegenstands (1, 1a - 1d) in Bezug auf einen zweiten Gegenstand (2) und/oder unabhängig von einer Unsicherheit einer Pose der Robotereinrichtung (3) in eine Zielpose (ZP) gebracht wird, wobei die Vorrichtung (4) umfasst:
eine Simulationseinheit (5) zum Simulieren von Bewegungsabschnitten der Robotereinrichtung (3) unter Berücksichtigung der Unsicherheit der Pose des ersten Gegenstands (1, 1a - 1d) und/oder der Unsicherheit der Pose der Robotereinrichtung (3); und
eine Bestimmungseinheit (6) zum Bestimmen des optimierten Bewegungsablaufs (8) der Robotereinrichtung (3) unter Berücksichtigung der simulierten Bewegungsabschnitte und von Randbedingungen, die zumindest eine Startpose (SP) und die Zielpose (ZP) des ersten Gegenstands (1, 1a - 1d) angeben.

15. Vorrichtung nach Anspruch 14 zum Durchführen des Verfahrens nach einem der Ansprüche 1 bis 12.
